# EUROPÄISCHE PATENTSCHRIFT

(11) **EP 1 752 687 B1**
(45) Veröffentlichungstag und Bekanntmachung des Hinweises auf die Patenterteilung: **07.12.2011**
(21) Anmeldenummer: 06014435.9
(22) Anmeldetag: 12.07.2006
(51) Int. Cl.: F16H 57/04

(54) **Getriebe mit zwei Getriebeölpumpen**
Transmission with two oil pumps
Transmission avec deux pompes à huile

(30) Priorität: 10.08.2005 DE 102005037687; 08.09.2005 DE 102005042685
(43) Veröffentlichungstag der Anmeldung: 14.02.2007
(73) Patentinhaber: Bayerische Motoren Werke Aktiengesellschaft, 80809 München (DE)
(72) Erfinder: Neuner, Josef, 83064 Raubling (DE)

(56) Entgegenhaltungen:
- US-A- 5 513 732
- US-A- 6 135 919
- US-A1- 2002 002 878
- US-B1- 6 361 287

## Beschreibung

Die vorliegende Erfindung betrifft ein Getriebe für Fahrzeuge gemäß den Merkmalen des Oberbegriffs des Patentanspruches 1. Ein derartiges Getriebe ist aus der FR2884782 bekannt.

Viele moderne Fahrzeuggetriebe sind mit Getriebeölpumpen ausgestattet. Das Getriebeöl hat zwei Hauptfunktionen. Zum einen dient es der Schmierung verschiedener Schmierstellen im Getriebe wie Lager, Zahnradstufen oder Kupplungen. Zum anderen dient es zur Kühlung, d. h. zur Abfuhr von Wärme von mechanisch und thermisch hoch belasteten Getriebebauteilen. Um eine hinreichende Schmierung und Kühlung sicherzustellen, wird bei modernen Getrieben ein Schmierölvolumenstrom benötigt, der pro Minute einem Vielfachen der im Getriebe enthaltenen Schmierölmenge entspricht. Beispielsweise kann es der Fall sein, dass bei einem Getriebe mit einer Schmierölmenge von 5 Litern ein Schmierölvolumenstrom und ein Kühlölvolumenstrom von je 25 Liter/min benötigt wird. Um eine gute Schmierung sicherzustellen, muss der Schmierölvolumenstrom mit hinreichend hohem Druck gefördert werden. Der Kühlölvolumenstrom hingegen muss nicht notwendigerweise mit hohem Druck gefördert werden.

Aufgabe der Erfindung ist es, ein Getriebe zu schaffen, bei dem in allen Betriebszuständen eine hinreichende Schmierung und Kühlung relevanter Getriebekomponenten sichergestellt ist.

Ausgangspunkt der Erfindung ist ein Getriebe für Fahrzeuge mit einem Getriebegehäuse, das einen Bodenbereich aufweist und das im Bodenbereich mit Getriebeöl befüllt ist. In dem Getriebe ist eine erste Ölpumpe angeordnet, die Öl aus dem Bodenbereich ansaugt und zu mindestens einer Getriebekomponente fördert, die durch das geförderte Öl gekühlt wird. Die erste Getriebeölpumpe kann als "Kühlölpumpe" bezeichnet werden. Bei der ersten Getriebeölpumpe handelt es sich um eine Saugstrahlpumpe. Saugstrahlpumpen benötigen bekanntermaßen relativ wenig Energie. Der geringe, von einer Saugstrahlpumpe erzeugte Förderdruck genügt jedoch, um thermisch belastete Getriebekomponenten hinreichend mit zur Kühlung verwendetem Getriebeöl zu versorgen.

In dem Getriebegehäuse ist ferner eine zweite Ölpumpe angeordnet, die Öl aus dem Bodenbereich ansaugt und zu mindestens einer Getriebekomponente fördert, die durch das Öl geschmiert wird. Die zweite Ölpumpe kann daher auch als "Schmierölpumpe" bezeichnet werden. Bei der zweiten Ölpumpe kann es sich z.B. um eine mechanisch von eine Getriebewelle angetriebene Zahnradpumpe oder um eine elektrisch angetriebene Pumpe handeln. Der Förderdruck der Schmierölpumpe ist im Vergleich zum Förderdruck der Saugstrahlpumpe deutlich größer. Für eine zuverlässige Getriebeschmierung ist nämlich ein gewisser Schmieröldruck erforderlich.

Die Saugstrahlpumpe wird mittels der Schmierölpumpe betrieben. Die Saugstrahlpumpe weist einen Saugeingang und einen Druckeingang auf. Der Druckeingang der Saugstrahlpumpe ist mit einem Druckausgang der Schmierölpumpe verbunden. Die Schmierölpumpe pumpt also einen Teil des von ihr geförderten Volumenstroms in den Druckeingang der Saugstrahlpumpe, wodurch in der Saugstrahlpumpe ein Unterdruck entsteht, der "Kühlöl" über den Saugeingang der Saugstrahlpumpe ansaugt.

Vorzugsweise sind die beiden Ölpumpen mit ihren saugseitigen Eingängen mit einem "gemeinsamen Saugeingang" verbunden, der im Bodenbereich des Getriebegehäuses angeordnet ist. Wie sich durch Versuche nachweisen lässt, gibt es nämlich bei vielen Getrieben genau einen optimalen Ansaugpunkt im Bodenbereich des Getriebes. An diesem optimalen Ansaugpunkt sollte der "gemeinsame Saugeingang" angeordnet sein. Wichtig ist nämlich, dass in allen Betriebszuständen des Fahrzeugs, d. h. sowohl bei maximaler Beschleunigung als auch bei maximaler Verzögerung der gemeinsame Saugeingang sich im Ölsumpf befindet.

Nach einer Weiterbildung der Erfindung weist die Schmierölpumpe einen Saugeingang auf, der über einen Ölfilter mit dem gemeinsamen Saugeingang in Fluidverbindung steht. Durch den Ölfilter ist sichergestellt, dass das Schmieröl gereinigt wird, bevor es zu den Schmierstellen des Getriebes gelangt.

Der Saugeingang der Kühlölpumpe hingegen steht vorzugsweise in unmittelbarer Fluidverbindung mit dem gemeinsamen Saugeingang. Das zur Kühlung verwendete Getriebeöl muss nämlich nicht notwendigerweise gereinigt werden. Ein Filter im Kühlölvolumenstrom würde nur einen unnötigen Strömungswiderstand darstellen, der sich ungünstig auf den Gesamtwirkungsgrad des Getriebes auswirkt.

Nach einer Weiterbildung ist in dem Getriebegehäuse eine "Ansaugeinrichtung" angeordnet. Die Ansaugeinrichtung weist ein Gehäuse mit einer den "gemeinsamen Saugeingang" der beiden Ölpumpen bildenden Öffnung auf. Das Gehäuse weist ferner einen ersten Ausgang aufweist, an den der Saugeingang der ersten Ölpumpe angeschlossen ist und einen zweiten Ausgang, an den der Saugeingang der zweiten Ölpumpe angeschlossen ist.

Zwischen dem gemeinsamen Saugeingang und dem zweiten Ausgangs, an den die Schmierölpumpe angeschlossen ist, kann der Ölfilter angeordnet sein. Bei dem Ölfilter kann es sich beispielsweise um ein Filtervlies handeln, das in das Gehäuse eingesetzt ist.

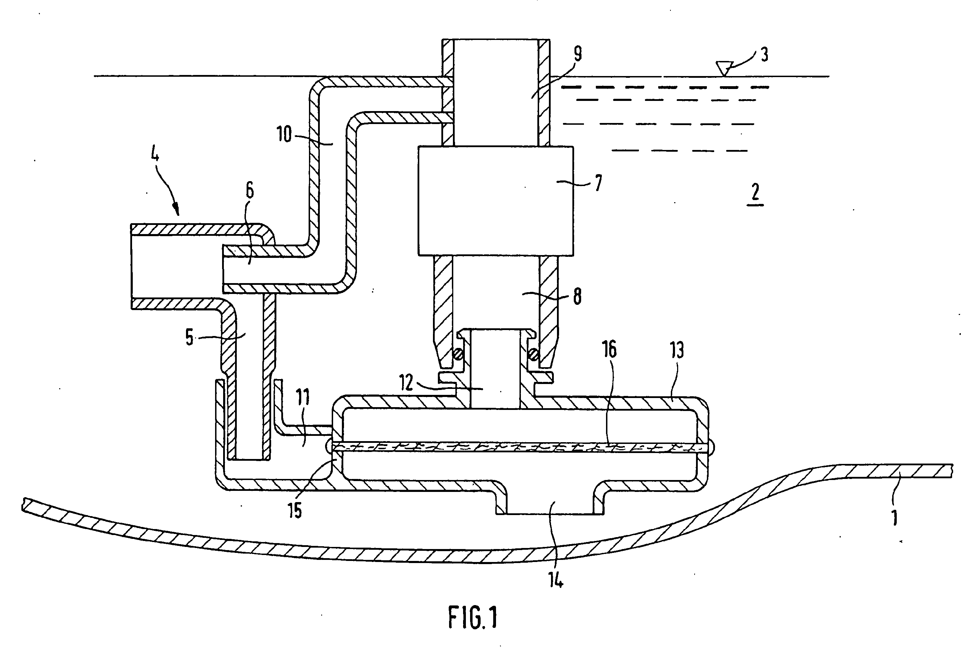

Im folgenden wird die Erfindung im Zusammenhang mit der Zeichnung näher erläutert. Die einzige Figur 1 zeigt das Grundprinzip der Erfindung.

Figur 1 zeigt ein hier nicht näher dargestelltes Getriebe mit einem Getriebegehäuse 1, das in seinem Bodenbereich 2 mit Getriebeöl befüllt ist. Der Getriebeölpegel ist durch ein Symbol, das mit dem Bezugszeichen 3 bezeichnet ist, angedeutet. In dem Getriebe ist eine erste Getriebeölpumpe 4 angeordnet, die Öl aus dem Bodenbereich 2 ansaugt und zu einer hier nicht dargestellten Getriebeölkomponente fördert, die durch das geförderte Öl gekühlt werden soll. Bei der Ölpumpe 4 handelt es sich um eine Saugstrahlpumpe, die einen Saugeingang 5 und einen Druckeingang 6 aufweist.

In dem Getriebe ist ferner eine zweite Getriebeölpumpe 7 angeordnet, die im folgenden auch als Schmierölpumpe bezeichnet wird und die einen Saugeingang 8 und eine Druckausgang 9 aufweist. Von dem Druckausgang 9 zweigt ein Seitenkanal 10 ab, der mit dem Druckeingang der Saugstrahlpumpe 4 verbunden ist. Ein Teilvolumenstrom des von der Schmierölpumpe 7 geförderten Volumenstroms wird für den Betrieb der Saugstrahlpumpe 4 verwendet. Der Saugeingang 5 der Saugstrahlpumpe 4 und der Saugeingang 8 der Schmierölpumpe 7 sind an einen ersten Ausgang 11 bzw. an einen zweiten Ausgang 12 eines Filtergehäuses 13 angeschlossen. An seiner Unterseite weist das Filtergehäuse 13 einen Saugeingang 14 auf, der als "gemeinsamer Saugeingang" für die beiden Ölpumpen 4, 7 fungiert. Der gemeinsame Saugeingang steht über einen Fluidkanal 15 in unmittelbarer Fluidverbindung mit dem Saugeingang 5 der Saugstrahlpumpe 4. Das von der Saugstrahlpumpe 4 geförderte "Kühlöl" wird also ungefiltert, aus dem Bodenbereich 2 des Getriebes gefördert.

Zwischen dem gemeinsamen Saugeingang 14 und dem Saugeingang 12 der Schmierölpumpe 7 ist ein Ölfilter 16 angeordnet. Bei dem hier gezeigten Ausführungsbeispiel handelt es sich bei dem Ölfilter 16 um ein Filtervlies, das in dem Filtergehäuse 13 zwischen dem gemeinsamen Saugeingang 14 und dem Saugeingang 8 der Schmierölpumpe 7 angeordnet ist. Das zur Schmierung verwendete Getriebeöl wird also bevor es aus dem Getriebeölsumpf in die Schmierölpumpe 7 gesaugt wird, durch den Ölfilter 16 gereinigt.

Wesentlich ist, dass das Filtergehäuse 13 so angeordnet sein kann, dass der gemeinsame Saugeingang 14 sich in einem Bereich befindet, der unter allen während des Betriebs des Fahrzeugs vorkommenden Beschleunigungs-, Verzögerungs- und Neigungszuständen stets unterhalb des Ölspiegels 3 liegt.

## Patentansprüche

1. Getriebe für Fahrzeuge, mit einem Getriebegehäuse (1), das einen Bodenbereich (2) aufweist und das im Bodenbereich (2) mit Getriebeöl befüllt ist, wobei in dem Getriebe eine erste Ölpumpe (4) angeordnet ist, die eine Saugstrahlpumpe ist und die Getriebeöl aus dem Bodenbereich (2) ansaugt und zu mindestens einer Getriebekomponente fördert, die durch das geförderte Getreibeöl gekühlt wird wobei
in dem Getriebegehäuse (1) eine zweite Ölpumpe (7) angeordnet ist, die Getriebeöl aus dem Bodenbereich (2) ansaugt und zu mindestens einer Getriebekomponente fördert, die durch das geförderte Getriebeöl geschmiert wird, wobei
die Saugstrahlpumpe (4) einen Saugeingang (5) und einen Druckeingang (6) aufweist, wobei der Druckeingang (6) mit einem Druckausgang (9) der zweiten Ölpumpe in Fluidverbindung steht und von der zweiten Ölpumpe (7) mit Getriebeöl versorgt wird,
**dadurch gekennzeichnet, dass** die beiden Ölpumpen (4, 7) saugseitig mit einem gemeinsamen Saugeingang (14) in Fluidverbindung stehen, der im Bodenbereich (2) des Getriebegehäuses (1) angeordnet ist.

2. Getriebe nach Anspruch 1, **dadurch gekennzeichnet, dass** die zweite Ölpumpe (7) einen Saugeingang (8) aufweist, der über einen Ölfilter (15) mit dem gemeinsamen Saugeingang (14) in Fluidverbindung steht.

3. Getriebe nach einem der vorangehenden Ansprüche, **dadurch gekennzeichnet, dass** der Saugeingang (5) der ersten Ölpumpe (4) in unmittelbarer Fluidverbindung mit dem gemeinsamen Saugeingang (14) steht, derart, dass über den gemeinsamen Saugeingang (14) angesaugtes Getriebeöl ungefiltert zur ersten Ölpumpe (4) gelangt.

4. Getriebe nach einem der vorangehenden Ansprüche, **dadurch gekennzeichnet, dass** in dem Getriebegehäuse (1) eine Ansaugeinrichtung angeordnet ist, wobei die Ansaugeinrichtung ein Gehäuse (13) aufweist, das eine den gemeinsamen Saugeingang bildende Öffnung (14) aufweist.

5. Getriebe nach einem der vorangehenden Ansprüche, **dadurch gekennzeichnet, dass** das Gehäuse (13) einen ersten Ausgang (11) aufweist, an den der Saugeingang (5) der ersten Ölpumpe angeschlossen ist.

6. Getriebe nach einem der vorangehenden Ansprüche, **dadurch gekennzeichnet, dass** das Gehäuse (13) einen zweiten Ausgang (12) aufweist, an den der Saugeingang (8) der zweiten Ölpumpe (7) angeschlossen ist.

7. Getriebe nach einem der vorangehenden Ansprüche, **dadurch gekennzeichnet, dass** in dem Gehäuse (13) zwischen dem gemeinsamen Saugeingang (14) und dem zweiten Ausgang (12) ein Filterelement (15) angeordnet ist

8. Getriebe nach Anspruch 7, **dadurch gekennzeichnet, dass** das Filterelement (15) einen Filtervlies aufweist.

## Claims

1. A gear unit for vehicles, comprising a gearbox (1) containing a bottom region (2) filled with gear oil, wherein a first oil pump (4) in the form of a sucking jet pump is disposed in the gear unit and sucks gear oil from the bottom region (2) and conveys it to at least one gear component cooled by the conveyed gear oil, wherein
a second oil pump (7) is disposed in the gearbox (1) and sucks gear oil from the bottom region (2) and conveys it to at least one gear component which is lubricated by the conveyed gear oil, wherein
the sucking jet pump (4) has a suction input (5) and a pressure input (6), wherein the pressure input (6) is in fluid connection to a pressure output (9) of the second oil pump (7), which supplies it with gear oil,
**characterised in that** on the suction side the two oil pumps (4, 7) are in fluid connection to a common suction input (14) disposed in the bottom region (2) of the gearbox (1).

2. A gear unit according to claim 1, **characterised in that** the second oil pump (7) has a suction input (8) which is in fluid connection to the common suction input (14) via an oil filter (15).

3. A gear unit according to any of the preceding claims, **characterised in that** the suction input (5) of the first oil pump (4) is in immediate fluid connection to the common suction input (14), such that oil sucked through the common suction input (14) reaches the first oil pump (4) without being filtered.

4. A gear unit according to any of the preceding claims, **characterised in that** an intake device is disposed in the gearbox (1), wherein the intake device has a casing (13) formed with an opening (14) constituting the common suction input.

5. A gear unit according to any of the preceding claims, **characterised in that** the casing (13) has a first output (11) connected to the suction input (5) of the first oil pump.

6. A gear unit according to any of the preceding claims, **characterised in that** the casing (13) has a second output (12) connected to the suction input (8) of the second oil pump (7).

7. A gear unit according to any of the preceding claims, **characterised in that** a filter element (15) is disposed on the casing (13) between the common suction input (14) and the second output (12).

8. A gear unit according to claim 7, **characterised in that** the filter element (15) comprises a filter fabric.

## Revendications

1. Transmission de véhicule comportant un carter de transmission (1) ayant une bâche (2) remplie d'huile de transmission,
* la transmission comportant une première pompe à huile (4) qui est une pompe à jet aspirant et qui aspire l'huile de transmission de la bâche (2) et alimente au moins un composant de la transmission pour le refroidir par l'huile de transmission,
* le carter de transmission (1) étant équipé d'une seconde pompe à huile (7) qui aspire l'huile de transmission de la bâche (2) et alimente au moins un composant de la transmission pour le lubrifier par l'huile de transmission ainsi fournie,
* la pompe à jet aspirant comporte une entrée d'aspiration (5) et une entrée de pression (6)
** l'entrée de pression (6) est reliée par une liaison de fluide à la sortie de pression (9) de la seconde pompe à huile, et est ainsi alimentée en huile de transmission par la seconde pompe à huile (7)
transmission **caractérisée en ce que**
le côté aspiration des deux pompes à huile (4, 7) est relié par une liaison de fluide à une entrée d'aspiration (14) commune installée dans la bâche (2) du carter de transmission (1).

2. Transmission selon la revendication 1,
**caractérisée en ce que**
la seconde pompe à huile (7) a une entrée d'aspiration (8) reliée par une liaison de fluide à l'entrée d'aspiration (14) commune par l'intermédiaire d'un filtre à huile (15).

3. Transmission selon l'une des revendications précédentes,
**caractérisée en ce que**
l'entrée d'aspiration (5) de la première pompe à huile (4) est reliée par une liaison de fluide, directe, à l'entrée d'aspiration commune (14), de façon que l'huile de transmission aspirée par l'entrée d'aspiration commune (14) arrive non filtrée dans la première pompe à huile (4).

4. Transmission selon l'une des revendications précédentes,
**caractérisée en ce que**
le carter de transmission (1) comporte une installation d'aspiration,
* l'installation d'aspiration comporte un boîtier (13) ayant un orifice (14) constituant l'entrée d'aspiration commune.

5. Transmission selon l'une des revendications précédentes,
**caractérisée en ce que**
le boîtier (13) a une première sortie (11) à laquelle est reliée l'entrée d'aspiration (5) de la première pompe à huile.

6. Transmission selon l'une des revendications précédentes,
**caractérisée en ce que**
le boîtier (13) a une seconde sortie (12) à laquelle est reliée l'entrée d'aspiration (8) de la seconde pompe à huile (7).

7. Transmission selon l'une des revendications précédentes,
**caractérisée par**
un élément de filtre (15) installé dans le boîtier (13) entre l'entrée d'aspiration commune (14) et la seconde sortie (12).

8. Transmission selon la revendication 7,
**caractérisée en ce que**
l'élément de filtre (15) une toile filtrante.
